(19) Europäisches Patentamt European Patent Office Office européen des brevets

(11) **EP 1 935 139 B1**

(12) **FASCICULE DE BREVET EUROPEEN**

(45) Date de publication et mention de la délivrance du brevet:
**26.08.2009 Bulletin 2009/35**

(21) Numéro de dépôt: **06808315.3**

(22) Date de dépôt: **12.09.2006**

(51) Int Cl.:
**H04L 12/28** (2006.01)

(86) Numéro de dépôt international:
**PCT/FR2006/050877**

(87) Numéro de publication internationale:
**WO 2007/031685 (22.03.2007 Gazette 2007/12)**

(54) **PROCEDE ET SYSTEME DE TRANSMISSION D'UN SIGNAL COMPRENANT UN PREAMBULE ET UNE TRAME DE DONNEES**

VERFAHREN UND SYSTEM ZUM SENDEN EINES SIGNALS MIT EINER PRÄAMBEL UND EINEM DATENRAHMEN

METHOD AND SYSTEM FOR TRANSMITTING A SIGNAL COMPRISING A PREAMBLE AND A DATA FRAME

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **13.09.2005 FR 0509312**

(43) Date de publication de la demande:
**25.06.2008 Bulletin 2008/26**

(73) Titulaire: **FRANCE TELECOM
75015 Paris (FR)**

(72) Inventeurs:
• **BARTHEL, Dominique
F-38190 Bernin (FR)**
• **BACHIR, Abdelmalik
F-38100 Grenoble (FR)**

(74) Mandataire: **Delumeau, François Guy et al
Cabinet Beau de Loménie
158 Rue de l'Université
75340 Paris Cedex 07 (FR)**

(56) Documents cités:
**US-A1- 2005 117 530**

• **EL-HOIYDI ET AL.: "Poster Abstract: WiseMAC, an Ultra Low Power MAC Protocol for the WiseNET Wireless Sensor Network" INTERNET ARTICLE, [Online] 5 novembre 2003 (2003-11-05), XP002384846 Extrait de l'Internet: URL:http://www.cens.ucla.edu/sensys03/proceedings/p302-elhoiydi.pdf>**

**Description**

Domaine technique de l'invention

L'invention se rapporte au domaine de la transmission d'un signal comprenant un préambule et une trame de données par échantillonnage de préambule dans un réseau de communication, et plus particulièrement dans un réseau sans fil utilisant le médium radio.

Arrière-plan de l'invention

Pour la transmission d'un signal sur un canal d'un réseau de communication, les protocoles d'accès à un médium classique (par exemple IEEE 802.11 DCF), nécessitent qu'un émetteur récepteur radio (*radio transceiver*, en anglais) soit allumé en permanence toujours prêt à recevoir le signal. Ce mode « prêt à recevoir » consomme beaucoup d'énergie. En effet, s'il n'y a aucune transmission sur le canal cette énergie est gaspillée par une écoute passive. Ce problème est nettement visible dans des réseaux de capteurs à faible trafic du type ad hoc où le canal est libre la plupart du temps.

Afin de résoudre ce problème, il existe des méthodes de transmission par échantillonnage de préambule qui permettent de réduire le surcoût de l'écoute passive.

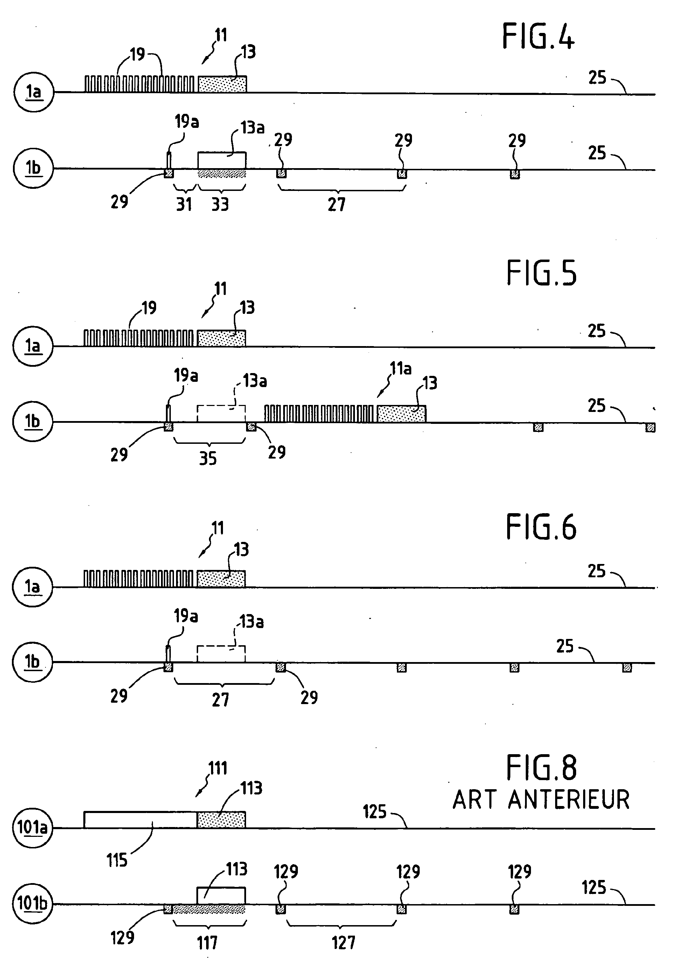

En effet, la figure 8 montre de manière schématique l'évolution dans le temps 125 de la transmission d'un signal 111 comprenant un préambule 115 et une trame de données 113 entre un noeud émetteur 101a et un noeud récepteur 101b. Le protocole à échantillonnage de préambule consiste pour un noeud à écouter le canal radio par intermittence.

En effet, l'axe du temps 125 du noeud récepteur 101b est divisé en des brèves périodes représentées par des petits carrés 129 pendant lesquelles la radio est allumée (c'est-à-dire que le noeud récepteur 101b est réveillé). Ces brèves périodes 129 d'écoutes sont espacées par des longues périodes 127 pendant lesquelles la radio est éteinte (c'est-à-dire que le noeud récepteur 101b est endormi). L'axe du temps 125 du noeud émetteur 101a montre l'envoi du signal 111 comprenant la trame de données 113 précédée par le préambule 115.

Ainsi, dans ce genre de protocoles un noeud passe la plupart de son temps avec la radio éteinte afin de réduire l'écoute passive et donc d'économiser l'énergie.

D'une manière générale, le noeud doit vérifier périodiquement, par exemple toutes les $T_w$ secondes (période 127), s'il y a un signal (ou un message) qui lui est destiné. Pour cela, le noeud se réveille pendant une petite période 129 pour écouter le canal.

Si le noeud trouve que le canal est libre, il retourne dormir (radio éteinte). En revanche, s'il détecte la présence d'un préambule (motif connus de bits) sur le canal, il reste réveillé (période 117) pour recevoir la trame de données 113 qui suit le préambule 115. Après réception de données 113, le noeud retourne dormir. En effet, le préambule 115 est une longue trame qui contient des répétitions de motifs de bits connus. Ceci permet à un noeud réveillé de reconnaître un motif donc de savoir qu'il s'agit d'un préambule 115.

Par ailleurs, quand un noeud veut envoyer une trame de données, il écoute d'abord le canal. S'il trouve que le canal est occupé, il continue d'écouter jusqu'à ce que le canal se libère. En revanche, s'il trouve que le canal est libre, il envoie un préambule avant d'envoyer la trame de données. La durée du préambule doit être au moins égale à $T_w$ pour assurer que tous les noeuds récepteurs potentiels soient réveillés pendant l'émission du préambule pour qu'ils ne ratent pas les données qui suivront le préambule.

Il est connu une méthode proposé par Enz CC., El-Hoiydi A., Decotignie J., et Peiris V. dans leur document intitulé "WiseNET: An Ultra low-Power Wireless Sensor Network Solution" (IEEE Computer, 37(8):62-70, août 2004) pour réduire la taille du préambule. En effet, ce document décrit un algorithme qui utilise un échantillonnage de préambule de taille réduite permettant de diminuer le coût des messages en point à point (*unicast* en anglais). Ceci permet de réduire la durée de transmission et de réception et donc économise de l'énergie.

Cependant, cette méthode ne permet pas de réduire le coût de communication en multipoint (*broadcast* en anglais) où ici l'écoute du préambule est une écoute inutile.

Par ailleurs, quand un noeud veut transmettre et trouve le canal occupé, il continue à écouter jusqu'à ce que le canal se libère pour envoyer sa trame. En effet, le noeud ne sait pas quand est ce que le canal se re-libère à nouveau. Cette écoute inutile consomme de l'énergie.

De plus, selon cette méthode, un noeud peut recevoir des trames de données redondantes car il n'a aucun moyen de vérifier s'il a déjà reçu les mêmes trames de données et ainsi beaucoup d'énergie est gaspillée inutilement.

Objet et résumé de l'invention

L'invention vise à optimiser la consommation d'énergie par les noeuds d'un réseau de communication, en particulier un réseau de type ad hoc.

A cet effet, l'invention concerne un procédé de transmission d'un signal comprenant un préambule et une trame de données dans un réseau de communication comportant une pluralité de noeuds, **caractérisé en ce qu**'il comprend

- la génération d'un signal dont le préambule comporte une séquence numérotée de micro-trames, la numérotation des micro-trames de ladite séquence étant telle que le numéro d'une des micro-trames permet de déduire le nombre restant de micro-trames dans la séquence, avant la trame de données,
- l'envoi du signal à travers le réseau.

En recevant une micro-trame, un noeud reconnaît qu'il s'agit d'un préambule. A partir du numéro de séquence contenu dans la micro-trame reçue, le noeud récepteur peut déterminer le nombre restant de micro-trames dans la séquence, avant la trame de données, et, par conséquent, le temps d'arrivée de la trame de données (c'est-à-dire la durée restante avant l'arrivée de cette trame de données, suite à la réception de la micro-trame considérée).

La durée entre une première et une dernière micro-trame de ladite séquence de micro-trames est supérieure ou égale à une période déterminée correspondant à un temps d'endormissement d'un noeud entre deux réveils consécutifs.

Ainsi, il est toujours assuré que le noeud peut recevoir au moins une micro-trame.

Selon un premier mode particulier de l'invention, à la réception d'une micro-trame par un noeud, ledit noeud lit le numéro de séquence de la micro-trame reçue, déduit le temps d'arrivée de la trame de données et s'endort entre temps. Le noeud récepteur peut ainsi s'endormir après avoir reçu la micro-trame et jusqu'à l'arrivée de la trame de données. Grâce à cela, la consommation d'énergie due à une écoute inutile est fortement réduite tout en garantissant la réception de la trame de données.

Ceci permet un gain en énergie en réduisant le coût de réception d'une trame de données en multipoints ou en point à point.

Selon un deuxième mode particulier de l'invention, afin d'accéder à un canal du réseau de communication :

a) un noeud se réveille pour écouter le canal;
b) si le noeud reçoit une micro-trame indiquant que le canal est occupé par un autre noeud,

- le noeud lit le numéro de séquence de la micro-trame pour déduire la durée d'occupation dudit canal,
- et s'endort pour ne se réveiller qu'après la fin de cette durée d'occupation afin d'accéder audit canal.

Ceci permet un gain en énergie en réduisant le temps d'écoute inutile pour accéder au canal dans le cas où ce dernier est trouvé occupé par un autre noeud.

Avantageusement, les micro-trames comportant une signature de la trame de données, à la réception d'une micro-trame par un noeud, ledit noeud lit la signature de la trame de données afin de vérifier s'il a déjà reçu cette trame de données.

Ceci permet de réduire encore davantage le coût de l'écoute inutile de trames redondantes, permettant encore un gain en énergie.

Cette signature peut être obtenue en appliquant une fonction de hachage à ladite trame de données. Ceci permet de créer des empreintes de taille fixe et réduite à partir des trames de données de taille variable.

Avantageusement, une micro-trame comporte une adresse de destination. Ceci permet à un noeud de reconnaître tout de suite si la trame de données est destinée à un autre noeud permettant ainsi de réduire encore davantage le coût de l'écoute inutile de trames.

L'invention vise aussi un dispositif d'émission d'un signal comprenant un préambule et une trame de données, dans un réseau de communication, **caractérisé en ce qu**'il comporte des moyens de génération destinés à générer un signal dont le préambule comporte une séquence numérotée de micro-trames, la numérotation des micro-trames de ladite séquence étant telle que le numéro d'une des micro-trames permet de déduire le nombre restant de micro-trames dans la séquence, avant la trame de données.

L'invention concerne également un dispositif de réception d'un signal transmis à travers un réseau de communication, ledit signal comprenant un préambule comportant une séquence numérotée de micro-trames et une trame de données, la numérotation des micro-trames de ladite séquence étant telle que le numéro d'une des micro-trames permet de déduire le nombre restant de micro-trames dans la séquence, avant la trame de "données" **caractérisé en ce qu**'il comporte des moyens de contrôle adaptés pour, sur réception d'une micro-trame d'un signal, lire le numéro de séquence de la micro-trame reçue, déterminer, à partir du numéro de séquence lu, le temps d'arrivée de la trame de données du signal et commander l'endormissement du dispositif de réception suite à la réception de la micro-trame puis son réveil de manière à recevoir ladite trame de données.

L'invention concerne encore un système de transmission de trames de données comportant au moins un noeud émetteur et un noeud récepteur, **caractérisé en ce que** le noeud émetteur comporte un dispositif d'émission tel que précédemment défini et le noeud récepteur comporte un dispositif de réception tel que précédemment défini.

L'invention vise enfin un signal comprenant un préambule et une trame de données, **caractérisé en ce que** le préambule comporte une séquence numérotée de micro-trames, la numérotation des micro-trames de ladite séquence étant telle que le numéro d'une des micro-trames permet de déduire le nombre restant de micro-trames dans la séquence, avant la trame de données. Une micro-trame peut comporter en outre

- une signature de la trame de données et/ou
- une adresse de destination.

### Brève description des dessins

D'autres particularités et avantages de l'invention ressortiront à la lecture de la description faite, ci-après, à titre indicatif mais non limitatif, en référence aux dessins annexés, sur lesquels :

- la figure 1 est une vue schématique d'un système de transmission comportant une pluralité de noeuds dans un réseau de communication selon l'invention ;
- la figure 2 est une vue schématique d'un signal comprenant une trame de données précédée par un préambule qui comporte une séquence de micros trames selon l'invention ;
- la figure 3 est une vue schématique d'une transmission entre deux noeuds d'un signal selon la figure 2 ;
- les figures 4 à 6 sont des vues schématiques d'une évolution dans le temps montrant plusieurs modes de transmission d'un signal entre deux noeuds ;
- la figure 7 est une vue schématique d'une structure d'une micro-trame comportant plusieurs champs selon l'invention ; et
- la figure 8 est une vue schématique d'un évolution dans le temps d'une transmission d'un signal entre deux noeuds selon l'art antérieur.

### Description détaillée de modes de réalisation

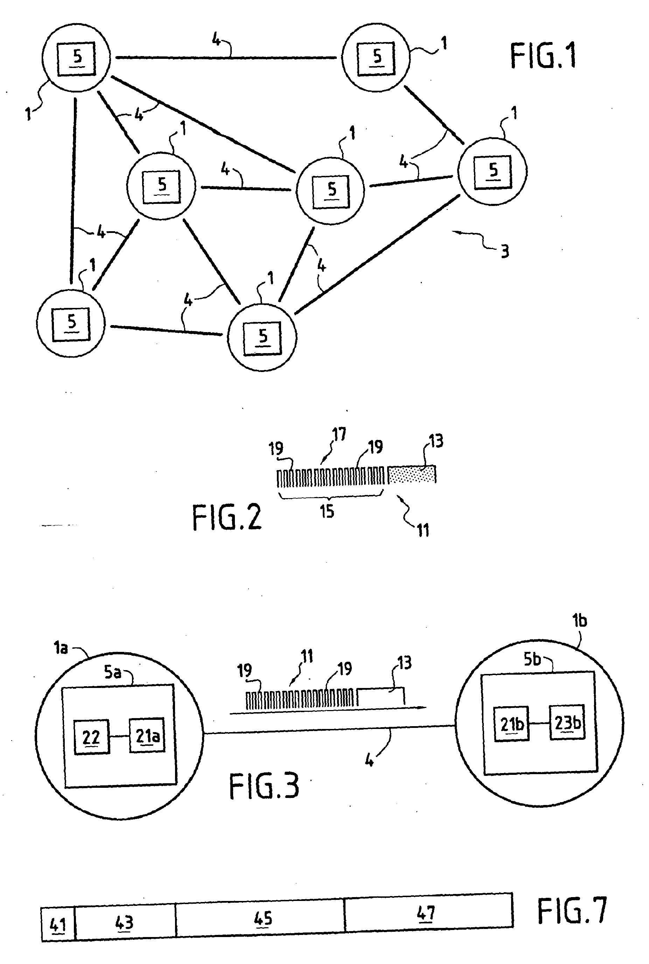

La figure 1 illustre un exemple d'un système de transmission comportant une pluralité de noeuds 1 dans un réseau de communication 3 selon l'invention. Ce réseau 3 peut être un réseau étendu ou local sans fil, utilisant le médium radio. Chaque noeud 1 du réseau 3 correspond à une entité qui peut être mobile et qui peut établir une communication avec ses noeuds 1 voisins par l'intermédiaire d'un canal 4 radio. En effet, le noeud 1 peut jouer le rôle d'un client, d'un serveur ou d'un routeur.

A titre d'exemple, le réseau 3 est un réseau ad hoc et plus particulièrement un réseau de capteurs où les noeuds 1 comportent des capteurs à faible consommation d'énergie, par exemple des capteurs ou sondes de température, de pression, de vitesse de l'air, ou de vibration pour prévenir des catastrophes naturelles. Un autre exemple peut être un réseau pour une informatique omniprésente (*ubiquitous computing* en anglais).

Dans l'exemple particulier de la description, chaque noeud 1 comporte un dispositif 5 d'émission et de réception de signaux, ces signaux comprenant un préambule et une trame de données, comme cela sera explicité ci-après. Le dispositif 5 comporte un émetteur récepteur radio. Il peut s'agir d'un capteur, d'un ordinateur, d'un téléphone portable, ou de tout autre dispositif qui peut recevoir et/ou émettre un signal.

La figure 2 montre de manière schématique un signal 11 selon l'invention, comprenant une trame de données 13 précédée par un préambule 15 qui comporte une séquence 17 de micro-trames 19. Cette séquence 17 de micro-trames est adaptée pour être reconnue par un noeud 1 comme étant un préambule 15 et de plus, elle peut comporter une ou plusieurs informations utiles permettant au noeud 1 de réduire le coût de l'écoute inutile.

En effet, la séquence 17 de micro-trames 19 est numérotée, c'est-à-dire que chaque micro-trame 19 comprend un numéro de séquence, correspondant à la référence 45 sur la figure 7, qui permet de déduire le nombre restant de micro-trames 19 précédant la trame de donnée 13. En d'autres termes, la numérotation des micro-trames de la séquence est telle que le numéro d'une des micro-trames permet de déduire le nombre restant de micro-trames dans la séquence, avant la trame de données. Une micro-trame 19 peut en outre comprendre une donnée de spécification ou type, référencée 41 sur la figure 7, indiquant que c'est bien une micro-trame 19.

A titre d'exemple, les micro-trames 19 peuvent être numérotées séquentiellement de 1 jusqu'à $m$. Le numéro $m$ désigne le nombre de micro-trames qu'il faut pour que la durée $T_w$ du préambule 15 soit au moins égale à la période d'inter-réveil d'un noeud récepteur. Ainsi, la durée $T_w$ du préambule contient $m$ micro-trames chacune ayant une durée $f$ et l'intervalle inter micro-trames ayant une durée $s$ Dans ce cas, la durée $T_w$ du préambule peut être exprimée en fonction de $m$, $s$ et $f$ selon la formule suivante :

$$T_w = (s+f).m$$

Autrement dit, la durée entre une première et une dernière micro-trame 19 de la séquence 17 de micro-trames est égale à la période déterminée $T_w$ correspondant à une durée supérieure ou égale à une période d'endormissement 27 d'un noeud 1 entre deux réveils 29 consécutifs (voir par exemple la figure 4).

Sur la figure 3, on a représenté des schémas blocs fonctionnels du noeud 1a et du noeud 1b, respectivement émetteur et récepteur dans l'exemple particulier décrit ici. Par souci de clarté, sur la figure 3, on a seulement représenté les éléments de la partie émission du dispositif d'émission/réception 5a du noeud 1a et les éléments de la partie réception du dispositif d'émission/réception 5b du noeud 1b. On notera néanmoins que les noeuds 1a et 1b peuvent ici jouer à la fois les rôles d'émetteur et de récepteur et comprennent donc chacun une partie émission et une partie réception.

En référence à la figure 3, la partie émission du dispositif d'émission et de réception 5a du noeud émetteur 1a comporte des moyens de génération 22 et des moyens d'émission 21a. Les moyens de génération 22 sont agencés pour générer un signal 11 conforme à celui précédemment décrit, comportant un préambule 15 suivi d'une trame de données 13. Le préambule 15 comprend en particulier une séquence 17 numérotée de micro-trames, la numérotation des micro-trames étant telle que le numéro d'une des micro-trames permet de déduire le nombre restant de micro-trames dans la séquence, avant la trame de données. Les moyens d'émission 21a sont agencés pour envoyer ce signal 11 vers le noeud récepteur 1b par l'intermédiaire du réseau de communication 3.

On notera que l'envoi du signal 11 par le noeud émetteur 1a peut être un envoi simultané du type diffusion générale (*broadcasts* en anglais) à un très grand nombre de noeuds (destinataires).

En référence à la figure 3, la partie réception du dispositif d'émission et de réception 5b du noeud 1b comporte des moyens de réception 21b et des moyens de contrôle 23b de ces moyens de réception 21b. Les moyens de réception 21b sont agencés pour recevoir un signal 11 conforme à celui envoyé par le noeud émetteur 1a. Les moyens de contrôle 23b sont agencés pour contrôler l'endormissement et le réveil des moyens de réception 21b selon un numéro de séquence compris dans une micro-trame 19 reçue par les moyens de réception 21b, comme cela sera explicité dans le procédé décrit plus loin. Ainsi, les moyens de contrôle 23b sont adaptés pour, sur réception d'une micro-trame 19 d'un signal 11, mettre en oeuvre celles des étapes du procédé décrit plus loin qui sont exécutées par le noeud récepteur 1b, en particulier :

- la lecture du numéro de séquence 45 de la micro-trame reçue 19,
- la détermination, à partir de ce numéro de séquence lu, du temps d'arrivée de la trame de données 13 du signal 11 et
- la commande de l'endormissement du noeud 1b, et plus précisément de son dispositif d'émission/réception 5b, suite à la réception de la micro-trame 19, puis son réveil de telle manière à recevoir cette trame de données 13.

Les moyens de contrôle 23b peuvent être constitués d'un microprocesseur, microcontrôleur ou tout autre composant programmable. Le composant programmable met en oeuvre un programme d'ordinateur comportant des instructions nécessaires à la réalisation du procédé de transmission de trames de données par échantillonnage de préambule selon l'invention.

Des programmes d'ordinateur peuvent être implémentés dans les noeuds 1 du système de transmission 3 pour mettre en oeuvre le procédé de transmission de trames de données par échantillonnage de préambule selon l'invention. Ainsi, l'invention porte aussi sur

- un programme d'ordinateur pour un dispositif d'émission d'un signal comprenant un préambule et une trame de données, le programme comportant des instructions pour commander la génération d'un signal dont le préambule comporte une séquence numérotée de micro-trames, la numérotation des micro-trames de cette séquence étant telle que le numéro d'une des micro-trames permet de déduire le nombre restant de micro-trames dans la séquence, avant la trame de données, lorsque le programme est exécuté par le dispositif d'émission, et
- programme d'ordinateur pour un dispositif de réception d'un signal conforme à celui décrit ci-dessus, comprenant des instructions de programme pour commander, sur réception d'une micro-trame du signal, la lecture du numéro de séquence de la micro-trame reçue, la détermination du temps d'arrivée de la trame de données du signal et un endormissement du dispositif de réception, suite à la réception de la micro-trame, suivi d'un réveil de telle manière à recevoir ladite trame de données.

Ces programmes peuvent être stockés dans ou transmis par des supports de données. Ceux-ci peuvent être des supports matériels de stockage, par exemple un CD-ROM, une disquette magnétique ou un disque dur, ou bien des supports transmissibles tels qu'un signal électrique, optique ou radio.

La figure 3 illustre de manière schématique une transmission d'un signal 11 entre les deux noeuds 1a et 1b du réseau de communication 3. En émission, le noeud émetteur 1a génère un signal 11 conforme à celui précédemment décrit. En particulier, le signal 11 comporte un préambule, qui comprend lui-même une séquence numérotée de micro-trames 19, suivi d'une trame de données 13. La numérotation des micro-trames 19 de la séquence 11 qui précède la trame de données 13 est telle que le numéro d'une de ces micro-trames permet de déduire le nombre restant de micro-trames dans la séquence, avant la trame de données 13. Le noeud émetteur 1a envoie le signal 11 généré à destination du noeud 1b à travers le réseau 3.

La figure 4 montre de manière schématique l'évolution dans le temps 25 de la transmission de ce signal 11 entre le noeud émetteur 1a et le noeud récepteur 1b. Ce noeud récepteur 1b vérifie périodiquement, par exemple toutes les $T_P$ secondes (période référencée 27 avec $T_P$ supérieur ou égal à $T_w$), s'il y a un message qui lui est destiné. Pour cela, le noeud récepteur 1b se réveille pendant une courte période 29 pour écouter le canal 4. Lors de l'une de ces périodes de réveil 29, il reçoit la micro-trame 19a, comme illustré sur la figure 4.

Le noeud récepteur 1b lit dans la micro-trame 19a le numéro de séquence qu'elle contient et en déduit le nombre restant de micro-trames dans la séquence, avant la trame de données 13, puis la durée correspondante de la période référencée 31 sur la figure 4. Quand les moyens de réception 21b du noeud récepteur 1b reçoivent la micro-trame 19a, les moyens de contrôle 23b lisent le numéro de séquence de cette micro-trame 19a et déduisent le nombre restant de micro-trames dans la séquence avant l'arrivée de la trame de données 13 puis le temps d'arrivée de la trame de données 13a, autrement dit la durée de la période référencée 31 sur la figure 4. Les moyens de contrôle 23b peuvent alors commander les moyens de réception 21b pour éteindre la radio jusqu'à l'instant d'arrivée de la trame de données 13, soit durant la période 31. Cet exemple montre que le noeud récepteur 1b peut être éteint durant la période 31, soit entre la réception de la micro-trame 19a et la réception de la trame donnée 13. Alors, le noeud 1b n'est réveillé que pendant une courte période 33, durant laquelle il reçoit la trame de données 13, par comparaison à la période 117 (voir figure 8 de l'art antérieur).

Pour calculer le gain en énergie de la méthode d'échantillonnage de micro-trames selon l'invention, par rapport à une méthode classique d'échantillonnage de préambule, on compare le temps moyens d'écoute MT (selon l'invention) avec le temps moyens d'écoute EP (classique) de réception d'une trame de données d'une durée $T$.

Dans ce cas, le gain en énergie est donné par la formule suivante :

$$Gain = 1 - MT / EP = 1 - \frac{(s+f)/2 + f + T}{m(s+f)/2 + T}$$

Etant donné que le nombre $m$ de micro-trames est très grand devant les durées $f$ (période d'une micro-trame) et $s$ (période entre deux micro-trames consécutives), la formule de gain ci-dessus indique une économie du coût de réception des données, notamment dans le cas d'une diffusion générale.

La figure 5 est un autre exemple de l'évolution dans le temps 25 de la transmission d'un signal 11 entre le noeud 1a et le noeud 1b selon un mode d'accès multiple avec écoute de porteuse (CSMA *Carrier Sense Multiple Access* en anglais). Ce mode d'accès permet le partage d'un canal 4 unique entre plusieurs noeuds 1. Ainsi, avant d'émettre, chaque noeud 1 doit écouter le canal 4 pour savoir s'il est libre ou non. Si le canal est libre alors le noeud 1 peut émettre, sinon le noeud 1 doit continuer à écouter jusqu'à ce que le canal 4 se libère pour qu'il puisse émettre. Le but de cette méthode est d'éviter les collisions dues aux accès simultanés au canal 4. On rappelle ici que le dispositif 5b du noeud 1b comprend à la fois des moyens de réception et des moyens d'émission.

Cet exemple montre que l'utilisation des micro-trames 19 permet de réduire le temps d'écoute inutile pour accéder au canal 4 dans le cas où ce dernier est trouvé occupé par un autre noeud 1 qui veut envoyer des données.

En effet, quand un noeud 1b se réveille, son dispositif d'émission/réception 5b écoute le canal 4. Si les moyens de réception 21b reçoivent une micro-trame 19a, alors les moyens de contrôle 23b déduisent que le canal 4 est occupé du fait d'une utilisation par un autre dispositif d'émission/réception 5b, et lisent le numéro de séquence de cette micro-trame 19a afin de déterminer la durée d'occupation 35 du canal permettant ainsi au dispositif d'émission/réception 5b de s'endormir pour ne se réveiller qu'après la fin de cette durée d'occupation 35 afin d'accéder audit canal 4. Autrement dit, ceci permet au noeud 1b d'éteindre la radio pendant cette durée d'occupation 35 du canal 4 et de ne se réveiller qu'après la fin de cette transmission pour réessayer d'accéder au canal 4 afin d'envoyer le signal 11.

En supposant que chaque noeud possède $n$ voisins qui peuvent détecter et décoder le signal 11, le gain en énergie est alors donné par la formule suivante :

$$Gain = 1 - MT / EP = 1 - \frac{n(s+f)/2 + nf + (n-1)T}{n.m.(s+f)/2 + n.T}$$

Cette formule montre que le gain dépend de la durée $T$ de la trame de données 13. Plus la durée $T$ est grande, plus grand est le gain.

La figure 6 est un autre exemple de l'évolution dans le temps 25 de la transmission d'un signal 11 entre le noeud émetteur 1a et le noeud récepteur 1b.

Selon cet exemple, les micro-trames 19 peuvent être utilisées pour permettre à un noeud 1b de filtrer les trames de données 13 avant de les recevoir.

En effet, une micro-trame 19 peut comporter une signature 47 (voir figure 7) de la trame de données 13. La signature peut être obtenue en appliquant une fonction de hachage à la trame de données 13 adaptée pour transformer cette trame de donnée 13, qui peut être de taille variable, en un code de taille fixe.

Dans ce cas, les moyens de contrôle 23b peuvent contrôler l'endormissement et le réveil du dispositif d'émission/réception 5b selon la signature de la trame de données 13 comprise dans la micro-trame 19a reçue.

La signature de la trame de données 13 permet à un noeud 1b d'éviter de recevoir des trames redondantes et donc inutiles. En effet, quand un noeud 1b se réveille pour écouter le canal 4, si son dispositif d'émission/réception 5b reçoit une micro-trame 19a, alors les moyens de contrôle 23b lisent la signature de la trame de données 13 afin de vérifier si le noeud 1b a déjà reçu cette trame de données 13. Les moyens de contrôle 23b peuvent par exemple comparer cette signature avec les signatures déjà reçues, s'ils trouvent cette signature parmi celles déjà reçues, alors ils peuvent déduire que le noeud 1b a déjà reçu la trame de donnée 13 qui va suivre et ainsi le noeud 1b peut s'endormir pendant la période 27.

Dans ce cas, le gain en énergie est donné par la formule suivante :

$$Gain = 1 - MT / EP = 1 - \frac{n(s+f)/2 + nf + (n-1)T}{n.m.(s+f)/2 + n.T}$$

On notera que le gain en réception dans les deux formules précédentes est le même car dans les deux cas on évite de recevoir la même quantité de micro-trames 19 et de trames de données 13.

Avantageusement, une micro trame 19 peut aussi comporter un champ pour une adresse 43 de destination (voir figure 7). Dans ce cas, les moyens de contrôle 23b peuvent aussi contrôler l'endormissement et le réveil du dispositif d'émission/réception 5b selon l'adresse de destination comprise dans la micro-trame 19a reçue.

Ceci permet à un noeud 1 de reconnaître tout de suite si la trame de données 13 est destinée à un autre noeud permettant ainsi de réduire encore davantage le coût de l'écoute inutile de trames.

La figure 7 montre une structure particulière d'une micro-trame 19 comportant quatre champs. Le premier champ est un champ-type 41 indiquant que la trame est une micro-trame 19, le deuxième champ est un champ-adresse 43 indiquant l'adresse de destination de la trame de données 13 qui suit la séquence de micro-trames 19, le troisième champ est un champ-numéro 45 indiquant le numéro de séquence de la micro-trame 19, et le quatrième champ est un champ-signature 47 indiquant la signature de la trame de données 13. Par ailleurs, on notera que la micro trame 19 peut comporter un ou plusieurs champs parmi les champs 41 à 47.

Ainsi, en plus d'éviter les écoutes passives et les collisions, le signal 11 selon l'invention permet d'éviter l'écoute inutile d'une sur-écoute (*overhearing* en anglais) en évitant la réception et le décodage d'une trame de données destinée à un autre noeud, ou d'une trame de données redondante dont le contenu est sans intérêt pour le routage ou pour l'application car déjà reçues, ou des trames de données occupant le canal en attente de la libération de ce dernier.

**Revendications**

1. Procédé de transmission d'un signal (11) comprenant un préambule (15) et une trame de données (13) dans un réseau de communication (3) comportant une pluralité de noeuds (1), **caractérisé en ce qu'**il comprend

   - la génération d'un signal (11) dont le préambule (15) comporte une séquence (17) numérotée de micro-trames (19), la numérotation des micro-trames de ladite séquence étant telle que le numéro d'une des micro-trames permet de déduire le nombre restant de micro-trames dans la séquence, avant la trame de données,
   - l'envoi du signal à travers le réseau.

2. Procédé selon la revendication 1, **caractérisé en ce que** la durée entre une première et une dernière micro-trame (19) de ladite séquence (17) de micro-trames (19) est supérieure ou égale à une période déterminée (27) correspondant à un temps d'endormissement d'un noeud (1) entre deux réveils (29) consécutifs.

**3.** Procédé selon l'une quelconque des revendications 1 et 2, **caractérisé en ce que,** à la réception d'une micro-trame (19a) par un noeud (1b), ledit noeud (1b) lit le numéro de séquence (45) de la micro-trame reçue, déduit le temps d'arrivée de la trame de données (13) et s'endort entre temps (31).

**4.** Procédé selon l'une quelconque des revendications 1 à 3, **caractérisé en ce que :**

a) un noeud (1b) se réveille pour écouter le canal (4) ;
b) si le noeud reçoit une micro-trame (19) indiquant que le canal est occupé par un autre noeud (1),

- le noeud (1b) lit le numéro de séquence de la micro-trame (19) pour déduire la durée d'occupation (35) dudit canal (4),
- et s'endort pour ne se réveiller qu'après la fin de cette durée d'occupation afin d'accéder audit canal.

**5.** Procédé selon l'une quelconque des revendications 1 à 4, **caractérisé en ce que,** les micro-trames (19) comportant une signature (47) de la trame de données (13), à la réception d'une micro-trame (19) par un noeud (1b), ledit noeud (1b) lit la signature (47) de la trame de données (13) afin de vérifier s'il a déjà reçu cette trame de données (13).

**6.** Dispositif d'émission d'un signal (11) comprenant un préambule (15) et une trame de données (13), dans un réseau de communication (3), **caractérisé en ce qu'**il comporte des moyens de génération (22) destinés à générer un signal (11) dont le préambule (15) comporte une séquence (17) numérotée de micro trames, la numérotation des micro-trames de ladite séquence étant telle que le numéro d'une des micro-trames permet de déduire le nombre restant de micro-trames dans la séquence, avant la trame de données.

**7.** Programme d'ordinateur pour un dispositif d'émission d'un signal (11) comprenant un préambule (15) et une trame de données (13), comprenant des instructions de programme pour commander la génération d'un signal (11) dont le préambule (15) comporte une séquence (17) numérotée de micro-trames, la numérotation des micro-trames de ladite séquence étant telle que le numéro d'une des micro-trames permet de déduire le nombre restant de micro-trames dans la séquence, avant la trame de données, lorsque le programme est exécuté par le dispositif d'émission.

**8.** Support comportant des moyens de stockage du programme selon la revendication 7.

**9.** Dispositif de réception d'un signal (11) transmis à travers un réseau de communication (3), ledit signal comprenant un préambule (15) comportant une séquence numérotée de micro-trames et une trame de données (13), la numérotation des micro-trames de ladite séquence étant telle que le numéro d'une des micro-trames permet de déduire le nombre restant de micro-trames dans la séquence, avant la trame de données,, **caractérisé en ce qu'**il comporte des moyens de contrôle (23b) adaptés pour, sur réception d'une micro-trame d'un signal, lire le numéro de séquence (45) de la micro-trame reçue, déterminer, à partir du numéro de séquence lu, le temps d'arrivée de la trame de données (13) du signal et commander l'endormissement du dispositif de réception suite à la réception de la micro-trame puis son réveil de manière à recevoir ladite trame de données.

**10.** Programme d'ordinateur pour un dispositif de réception d'un signal transmis à travers un réseau, ledit signal comprenant un préambule (15) comportant une séquence numérotée de micro-trames et une trame de données (13), la numérotation des micro-trames de ladite séquence étant telle que le numéro d'une des micro-trames permet de déduire le nombre restant de micro-trames dans la séquence, avant la trame de données, **caractérisé en ce qu'**il comprend des instructions de programme pour commander, sur réception d'une micro-trame d'un signal, la lecture du numéro de séquence (45) de la micro-trame reçue, la détermination du temps d'arrivée de la trame de données (13) du signal et un endormissement du dispositif de réception suite à la réception de la micro-trame suivi d'un réveil de manière à recevoir ladite trame de données.

**11.** Support de programme comportant des moyens de stockage du programme selon la revendication 10.

**12.** Système de transmission de trames de données comportant au moins un noeud émetteur (1a) et un noeud récepteur (1b), **caractérisé en ce que** le noeud émetteur (1a) comporte un dispositif selon la revendication 6 et le noeud récepteur (1b) comporte un dispositif selon la revendication 9.

**13.** Signal comprenant un préambule (15) et une trame de données (13), **caractérisé en ce que** le préambule (15) comporte une séquence (17) numérotée de micro-trames (19), la numérotation des micro-trames de ladite séquence étant telle que le numéro d'une des micro-trames permet de déduire le nombre restant de micro-trames dans la séquence, avant la trame de données.

**Claims**

1. Method of transmitting a signal (11) comprising a preamble (15) and a data frame (13) in a communication network (3) having a plurality of nodes (1), **characterized in that** it comprises

 - the generation of a signal (11) whose preamble (15) includes a numbered sequence (17) of microframes (19), the numbering of the microframes of said sequence being such that the number of one of the microframes can be used to deduce the remaining number of microframes in the sequence, before the data frame,
 - the sending of the signal through the network.

2. Method according to Claim 1, **characterized in that** the time between a first and a last microframe (19) of said sequence (17) of microframes (19) is greater than or equal to a determined period (27) corresponding to a putting-to-sleep time of a node (1) between two consecutive wake-ups (29).

3. Method according to either of Claims 1 and 2, **characterized in that,** when a microframe (19a) is received by a node (1b), said node (1b) reads the sequence number (45) of the received microframe, deduces the arrival time of the data frame (13) and goes to sleep in the meantime (31).

4. Method according to any one of Claims 1 to 3, **characterized in that:**

 a) a node (1b) wakes up to listen to the channel (4) ;
 b) if the node receives a microframe (19) indicating that the channel is occupied by another node (1),

 - the node (1b) reads the sequence number of the microframe (19) to deduce the occupancy time (35) of said channel (4),
 - and goes to sleep to wake up only after the end of this occupancy time in order to access said channel.

5. Method according to any one of Claims 1 to 4, **characterized in that**, the microframes (19) comprising a signature (47) of the data frame (13), when a microframe (19) is received by a node (1b), said node (1b) reads the signature (47) of the data frame (13) in order to check whether it has already received this data frame (13).

6. Device for transmitting a signal (11) comprising a preamble (15) and a data frame (13), in a communication network (3), **characterized in that** it comprises generation means (22) intended to generate a signal (11) whose preamble (15) includes a numbered sequence (17) of microframes, the numbering of the microframes of said sequence being such that the number of one of the microframes can be used to deduce the remaining number of microframes in the sequence, before the data frame.

7. Computer program for a device for transmitting a signal (11) comprising a preamble (15) and a data frame (13), comprising program instructions for controlling the generation of a signal (11) whose preamble (15) includes a numbered sequence (17) of microframes, the numbering of the microframes of said sequence being such that the number of one of the microframes can be used to deduce the remaining number of microframes in the sequence, before the data frame, when the program is run by the transmission device.

8. Medium comprising means of storing the program according to Claim 7.

9. Device for receiving a signal (11) transmitted through a communication network (3), said signal comprising a preamble (15) including a numbered sequence of microframes and a data frame (13), the numbering of the microframes of said sequence being such that the number of one of the microframes can be used to deduce the remaining number of microframes in the sequence, before the data frame, **characterized in that** it comprises control means (23b) adapted to, upon receipt of a microframe of a signal, read the sequence number (45) of the received microframe, determine, from the sequence number that is read, the arrival time of the data frame (13) of the signal and order the putting-to-sleep of the receiving device following the receipt of the microframe then its waking-up so as to receive said data frame.

10. Computer program for a device for receiving a signal transmitted through a network, said signal comprising a preamble (15) including a numbered sequence of microframes and a data frame (13), the numbering of the microframes of said sequence being such that the number of one of the microframes can be used to deduce the remaining number of microframes in the sequence, before the data frame, **characterized in that** it comprises program instructions for ordering, upon receipt of a microframe of a signal, the reading of the sequence number (45) of the received microframe, the determination of the arrival time of the data frame (13) of the signal and a putting-to-sleep of the receiving device following the receipt of the microframe followed by a waking-up so as to receive said data frame.

11. Program medium comprising means of storing the program according to Claim 10.

12. System for transmitting data frames comprising at least one transmitting node (1a) and one receiving node (1b), **characterized in that** the transmitting node (1a) includes a device according to Claim 6 and the receiving node (1b) includes a device according to Claim 9.

13. Signal comprising a preamble (15) and a data frame (13), **characterized in that** the preamble (15) includes a numbered sequence (17) of microframes (19), the numbering of the microframes of said sequence being such that the number of one of the microframes can be used to deduce the remaining number of microframes in the sequence, before the data frame.

**Patentansprüche**

1. Verfahren zur Übertragung eines eine Präambel (15) und einen Datenrahmen (13) enthaltenden Signals (11) in einem mehrere Knoten (1) aufweisenden Kommunikationsnetz (3), **dadurch gekennzeichnet, dass** es enthält

   - die Erzeugung eines Signals (11), dessen Präambel (15) eine nummerierte Folge (17) von Mikrorahmen (19) aufweist, wobei die Nummerierung der Mikrorahmen der Folge so ist, dass die Nummer eines der Mikrorahmen es ermöglicht, die verbleibende Anzahl von Mikrorahmen in der Folge vor dem Datenrahmen abzuleiten,
   - das Senden des Signals über das Netz.

2. Verfahren nach Anspruch 1, **dadurch gekennzeichnet, dass** die Dauer zwischen einem ersten und einem letzten Mikrorahmen (19) der Folge (17) von Mikrorahmen (19) größer als eine oder gleich einer bestimmten Periode (27) ist, die einer Schlafzeit eines Knotens (1) zwischen zwei aufeinanderfolgenden Aufwachvorgängen (29) entspricht.

3. Verfahren nach einem der Ansprüche 1 und 2, **dadurch gekennzeichnet, dass** bei Empfang eines Mikrorahmens (19a) durch einen Knoten (1b) der Knoten (1b) die Folgenummer (45) des empfangenen Mikrorahmens liest, die Ankunftszeit des Datenrahmens (13) ableitet und zwischenzeitlich einschläft (31).

4. Verfahren nach einem der Ansprüche 1 bis 3, **dadurch gekennzeichnet, dass:**

   a) ein Knoten (1b) aufwacht, um den Kanal (4) abzuhören;
   b) wenn der Knoten einen Mikrorahmen (19) empfängt, der angibt, dass der Kanal von einem anderen Knoten (1) besetzt ist,

   - der Knoten (1b) die Folgenummer des Mikrorahmens (19) liest, um die Besetzungsdauer (35) des Kanals (4) abzuleiten,
   - und einschläft, um erst nach dem Ende dieser Besetzungsdauer aufzuwachen, um auf den Kanal zuzugreifen.

5. Verfahren nach einem der Ansprüche 1 bis 4, **dadurch gekennzeichnet, dass**, da die Mikrorahmen (19) eine Signatur (47) des Datenrahmens (13) aufweisen, beim Empfang eines Mikrorahmens (19) durch einen Knoten (1b) der Knoten (1b) die Signatur (47) des Datenrahmens (13) liest, um zu überprüfen, ob er diesen Datenrahmen (13) bereits empfangen hat.

6. Vorrichtung zum Senden eines eine Präambel (15) und einen Datenrahmen (13) enthaltenden Signals (11) in einem Kommunikationsnetz (3), **dadurch gekennzeichnet, dass** sie Erzeugungseinrichtungen (22) aufweist, die dazu bestimmt sind, ein Signal (11) zu erzeugen, dessen Präambel (15) eine nummerierte Folge (17) von Mikrorahmen aufweist, wobei die Nummerierung der Mikrorahmen der Folge so ist, dass die Nummer eines der Mikrorahmen es ermöglicht, die verbleibende Anzahl von Mikrorahmen in der Folge vor dem Datenrahmen abzuleiten.

**7.** Computerprogramm für eine Vorrichtung zum Senden eines eine Präambel (15) und einen Datenrahmen (13) enthaltenden Signals (11), das Programmanweisungen zur Steuerung der Erzeugung eines Signals (11) enthält, dessen Präambel (15) eine nummerierte Folge (17) von Mikrorahmen aufweist, wobei die Nummerierung der Mikrorahmen der Folge so ist, dass die Nummer eines der Mikrorahmen es ermöglicht, die verbleibende Anzahl von Mikrorahmen in der Folge vor dem Datenrahmen abzuleiten, wenn das Programm von der Sendevorrichtung ausgeführt wird.

**8.** Träger, der Speichermittel des Programms nach Anspruch 7 aufweist.

**9.** Vorrichtung zum Empfang eines Signals (11), das über ein Kommunikationsnetz (3) übertragen wird, wobei das Signal eine Präambel (15), die eine nummerierte Folge von Mikrorahmen aufweist, und einen Datenrahmen (13) enthält, wobei die Nummerierung der Mikrorahmen der Folge so ist, dass die Nummer eines der Mikrorahmen es ermöglicht, die verbleibende Anzahl von Mikrorahmen in der Folge vor dem Datenrahmen abzuleiten, **dadurch gekennzeichnet, dass** sie Überwachungseinrichtungen (23b) aufweist, die geeignet sind, um bei Empfang eines Mikrorahmens eines Signals die Folgenummer (45) des empfangenen Mikrorahmens zu lesen, ausgehend von der gelesenen Folgenummer die Ankunftszeit des Datenrahmens (13) des Signals zu bestimmen, und das Einschlafen der Empfangsvorrichtung nach dem Empfang des Mikrorahmens und ihr Aufwachen zum Empfang des Datenrahmens zu steuern.

**10.** Computerprogramm für eine Vorrichtung zum Empfang eines über ein Netz übertragenen Signals, wobei das Signal eine Präambel (15) enthält, die eine nummerierte Folge von Mikrorahmen und einen Datenrahmen (13) aufweist, wobei die Nummerierung der Mikrorahmen der Folge so ist, dass die Nummer eines der Mikrorahmen es ermöglicht, die verbleibende Anzahl von Mikrorahmen in der Folge vor dem Datenrahmen abzuleiten, **dadurch gekennzeichnet, dass** es Programmanweisungen enthält, um bei Empfang eines Mikrorahmens eines Signals das Lesen der Folgenummer (45) des empfangenen Mikrorahmens, die Bestimmung der Ankunftszeit des Datenrahmens (13) des Signals und ein Einschlafen der Empfangsvorrichtung nach dem Empfang des Mikrorahmens gefolgt von einem Aufwachen zum Empfang des Datenrahmens zu steuern.

**11.** Programmträger, der Einrichtungen zum Speichern des Programms nach Anspruch 10 aufweist.

**12.** System zur Übertragung von Datenrahmen, das mindestens einen Sendeknoten (1a) und einen Empfangsknoten (1b) aufweist, **dadurch gekennzeichnet, dass** der Sendeknoten (1a) eine Vorrichtung nach Anspruch 6 und der Empfangsknoten (1b) eine Vorrichtung nach Anspruch 9 aufweist.

**13.** Signal mit einer Präambel (15) und mit einem Datenrahmen (13), **dadurch gekennzeichnet, dass** die Präambel (15) eine nummerierte Folge (17) von Mikrorahmen (19) aufweist, wobei die Nummerierung der Mikrorahmen der Folge so ist, dass die Nummer eines der Mikrorahmen es ermöglicht, die verbleibende Anzahl von Mikrorahmen in der Folge vor dem Datenrahmen abzuleiten.

FIG.1

FIG.2

FIG.3

FIG.7

# FIG.4

# FIG.5

# FIG.6

# FIG.8
## ART ANTERIEUR

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Enz CC. ; El-Hoiydi A. ; Decotignie J. ; Peiris V.** WiseNET: An Ultra low-Power Wireless Sensor Network Solution. *IEEE Computer,* Août 2004, vol. 37 (8), 62-70